# EUROPÄISCHE PATENTANMELDUNG

(11) **EP 4 389 568 A1**
(43) Veröffentlichungstag der Anmeldung: **26.06.2024**
(21) Anmeldenummer: 23205587.1
(22) Anmeldetag: 24.10.2023
(51) Int. Cl.: B62D 25/02, B62D 27/02

(54) **KRAFTFAHRZEUGBAUTEIL UMFASSEND ZWEI PROFILE**

(30) Priorität: 22.12.2022 DE 102022214326
(71) Anmelder: MAGNA STEYR Fahrzeugtechnik GmbH & Co KG, 8041 Graz (AT)
(72) Erfinder: ERLACHER, Manuel, 9545 Radenthein (AT); MOKINA, Thomas, 8054 Seiersberg (AT); SULCOVÁ, Olga, 8054 Graz (AT)
(74) Vertreter: Zangger, Bernd

(57) **Zusammenfassung**

Ein Kraftfahrzeugbauteil, insbesondere Schweller, umfassend ein erstes Profil (1) und ein zweites Profil (2), wobei das erste Profil (1) und das zweite Profil (2) jeweils eine Verbindungsfläche (3) aufweisen, wobei das erste und das zweite Profil (1, 2) an deren Verbindungsflächen (3) mit Hilfe zumindest eines Verbindungsmittels (4) aneinander gefügt sind, wobei das erste Profil und das zweite Profil an einem Ende (5) der Verbindungsfläche (3) formschlüssig miteinander verbunden sind und ein Verfahren zur Herstellung eines solchen Kraftfahrzeugbauteils.

## Beschreibung

### Gebiet der Erfindung

Die vorliegende Erfindung betrifft ein Kraftfahrzeugbauteil, insbesondere einen Schweller, umfassend ein erstes Profil und ein zweites Profil. Die Erfindung betrifft auch ein Verfahren zur Herstellung eines solchen Kraftfahrzeugbauteils.

### Stand der Technik

Es ist bekannt, dass manche Kraftfahrzeugbauteile aus mehreren, oft langen Profilen zusammengebaut werden, insbesondere können beispielsweise die Schweller eines Kraftfahrzeugs aus zwei oder mehr sich in Fahrzeuglängsrichtung erstreckenden Hohlprofilen gebildet sein. Derartige Profile können großflächig an Verbindungsflächen, wie beispielsweise Klebeflächen, miteinander verbunden und gefügt sein. Ein solches Kraftfahrzeugbauteil kann insbesondere ein mehrteiliger Schweller sein. Die Profile können mittels kontinuierlichen Herstellungsprozessen, wie zum Beispiel Strangpressen gefertigt sein. Die Profile können an den Längsflächen als Verbindungsflächen miteinander verbunden sein, beispielsweise durch großflächiges Kleben, Nieten oder Schweißen. Das Kraftfahrzeugbauteil kann somit ein aus mehreren Strangpressprofilen zusammengesetzter Schweller sein.

Um derartige Profile miteinander zu verbinden, wird eine hohe Anzahl von Verbindungspunkten, wie Stanzniete, Widerstandspunktschweißpunkte, und/oder große Befestigungsflächen beispielsweise für eine Verklebung benötigt.

### Zusammenfassung der Erfindung

Es ist eine Aufgabe der Erfindung, ein Kraftfahrzeugbauteil, insbesondere einen Schweller, anzugeben, der aus mindestens zwei Profilen besteht, die auf einfachere und kostengünstigere Weise, zuverlässig aneinander gefügt sind. Eine weitere Aufgabe der Erfindung ist es, ein einfaches und kostengünstiges Verfahren zur Herstellung eines solchen Kraftfahrzeugbauteils anzugeben.

Die Lösung der Aufgabe erfolgt durch ein Kraftfahrzeugbauteil, insbesondere Schweller, umfassend ein erstes Profil und ein zweites Profil, wobei das erste Profil und das zweite Profil jeweils eine Verbindungsfläche aufweisen, wobei das erste und das zweite Profil an deren Verbindungsflächen mit Hilfe zumindest eines Verbindungsmittels aneinander gefügt sind, wobei das erste Profil und das zweite Profil an einem Ende der Verbindungsfläche formschlüssig miteinander verbunden sind.

Erfindungsgemäß sind ein erstes Profil und ein zweites Profil an einer Verbindungsfläche aneinander gefügt. Dazu wird zumindest ein Verbindungsmittel verwendet, das vorzugsweise ein separates Element ist, zusätzlich zu den beiden Profilen, beispielsweise ein Klebstoff, um die beiden Verbindungsflächen miteinander zu verkleben. Das Verbindungsmittel kann auch durch die beiden Profile selbst ausgebildet sein, insbesondere als formschlüssige Verbindung der beiden Profile aneinander. Zusätzlich zu diesem Verbindungsmittel für die Verbindungsflächen, erfolgt das Fügen der beiden Profile über ein bauteilintegriertes Verbindungssystem, dass die Enden der Verbindungsflächen der beiden Profile aneinander fügt, nämlich über eine formschlüssige Verbindung der Enden der Verbindungsflächen beiden Profile aneinander. Die formschlüssige Verbindung ist an einem Ende der Verbindungsfläche, also an einem Rand der Verbindungsfläche ausgebildet, und zwar bevorzugt genau an einem Ende bzw. an einem Rand der Verbindungsfläche, also einseitig, und in einer anderen Ausführungsform an zwei gegenüberliegenden Enden bzw. Rändern der Verbindungsfläche, also zweiseitig an den Enden der Verbindungsfläche.

Dadurch, dass das erste und das zweite Profil an einem Ende der Verbindungsfläche formschlüssig miteinander verbunden sind, kann die sonstige Verbindung der Verbindungsflächen reduziert oder vereinfacht werden und Verbindungsmittel eingespart werden, oder die Qualität der Verbindung bessert werden.

Weiterbildungen der Erfindung sind in den abhängigen Ansprüchen, der Beschreibung sowie den beigefügten Zeichnungen angegeben.

Vorzugsweise erstreckt sich das Ende der Verbindungsfläche, an welchem die beiden Profile formschlüssig miteinander verbunden sind, entlang einer Längsrichtung, also x-Richtung, der beiden Profile. Die beiden Profile sind somit über deren Länge, bevorzugt über im Wesentlichen deren gesamte Länge, formschlüssig miteinander verbunden. Diese Längsrichtung der Profile liegt bevorzugt in der vorgesehenen Einbaulage in einem Kraftfahrzeug ebenfalls in x-Richtung des Fahrzeugs, als in Fahrzeuglängsrichtung. Die Verbindungsfläche und die formschlüssige Verbindung kann sich über mindestens 40%, bevorzugt mindestens 60 %, besonders bevorzugt mindestens 80% der Länge des Profils und/oder in Einbaulage in einem Fahrzeug der Länge des Fahrzeugs erstrecken.

Bevorzugt sind das erste Profil und das zweite Profil an dem Ende der Verbindungsfläche durch eine dreh- oder schwenkbare Verbindung formschlüssig miteinander verbunden. Die beiden Profile greifen somit in einer dreh- oder schwenkbaren Weise ineinander ein. Die formschlüssige Verbindung bildet eine Dreh- oder Schwenkachse aus. Hierdurch kann beispielsweise Klebstoff als Verbindungsmittel an der Verbindungsfläche gezielter aufgetragen werden und die Qualität der Verklebung verbessert werden.

Bevorzugt sind das erste Profil und das zweite Profil an dem Ende der Verbindungsfläche so formschlüssig miteinander verbunden, dass die beiden Profile zumindest im Bereich des Endes der Verbindungsfläche zumindest in den beiden Querrichtungen zur Längsrichtung der beiden Profile, also in y- und z-Richtung, festgelegt sind.

Vorzugsweise sind das erste Profil und das zweite Profil an demjenigen Ende, dass dem Ende der Verbindungsfläche an welchem die beiden Profile formschlüssig miteinander verbunden sind gegenüberliegt, durch die Verbindungsmittel oder durch weitere Verbindungsmittel aneinander befestigt. An diesem gegenüberliegenden Ende der Verbindungsfläche kann somit das Verbindungsmittel verwendet werden, dass dem Fügen der Verbindungsflächen dient, oder es kann ein anderes Verbindungsmittel zusätzlich zu einem Verbindungsmittel an der Verbindungsfläche verwendet werden, beispielsweise Schrauben, Nieten oder Klemmen zusätzlich zu einem Klebstoff. Das weitere Verbindungsmittel kann auch durch eine formschlüssige Verbindung der beiden Profile aneinander, insbesondere durch eine Steckverbindung, gebildet sein.

Bevorzugt ist das Verbindungsmittel Klebstoff und/oder Nieten, Schrauben oder eine Verschweißung.

Bevorzugt weist die Verbindungsfläche Vertiefungen auf, beispielsweise Nuten, so dass die Verbindungsfläche durch die Vertiefungen in mehrere kleinere Verbindungsflächen aufgeteilt ist. Die Vertiefungen können sich bevorzugt in Längsrichtung der beiden Profile erstrecken.

Ein erfindungsgemäßes Verfahren zur Herstellung eines solchen Kraftfahrzeugbauteils kann vorsehen, dass das erste Profil und das zweite Profil separat voneinander bereitgestellt werden, dass danach das erste Profil und das zweite Profil an einem Ende der Verbindungsfläche formschlüssig miteinander verbunden werden und dass danach das erste und das zweite Profil an deren Verbindungsflächen durch Verbindungsmittel aneinander befestigt werden und/oder zumindest an demjenigen Ende, dass dem Ende der Verbindungsfläche an welchem die beiden Profile formschlüssig miteinander verbunden sind gegenüberliegt, durch die Verbindungsmittel oder durch weitere Verbindungsmittel aneinander befestigt werden.

Bevorzugt werden das erste Profil und das zweite Profil an dem Ende der Verbindungsfläche formschlüssig miteinander verbunden, insbesondere ein Profil in das andere Profil eingehängt oder eingeschoben, wobei die beiden Verbindungsflächen zunächst nicht parallel zueinander ausgerichtet sind, und dass danach das erste und das zweite Profil zueinander geschwenkt werden, so dass deren Verbindungsflächen parallel zueinander ausgerichtet werden, und dass dabei, oder danach, die beiden Verbindungsflächen durch Verbindungsmittel aneinander befestigt werden, zumindest an demjenigen Ende, dass dem Ende der Verbindungsfläche an welchem die beiden Profile formschlüssig miteinander verbunden sind, gegenüberliegt.

### Kurzbeschreibung der Zeichnungen

Die Erfindung wird im Folgenden beispielhaft unter Bezugnahme auf die Zeichnungen beschrieben.
- Fig. 1a: ist eine Schnittansicht eines erfindungsgemäßen Kraftfahrzeugbauteils mit daran befestigter Antriebsbatterie.
- Fig. 1b: ist eine Detaildarstellung des in Fig. 1a eingezeichneten Ausschnitts (oben) des Kraftfahrzeugbauteils gemäß Fig. 1a.
- Fig. 1c: ist eine Detaildarstellung des in Fig. 1a eingezeichneten Ausschnitts im Bereich des weiteren Verbindungsmittels (unten) des Kraftfahrzeugbauteils gemäß Fig. 1a.
- Fig. 2: ist eine schematische Darstellung des Fügeprozesses eines erfindungsgemäßen Kraftfahrzeugbauteils.
- Fig. 3 a-f: zeigen Verfahrensschritte bei der Herstellung eines erfindungsgemäßen Kraftfahrzeugbauteils gemäß Fig. 1a.
- Fig. 4: ist eine dreidimensionale Darstellung eines erfindungsgemäßen Kraftfahrzeugbauteils gemäß Fig. 1a.

### Detaillierte Beschreibung der Erfindung

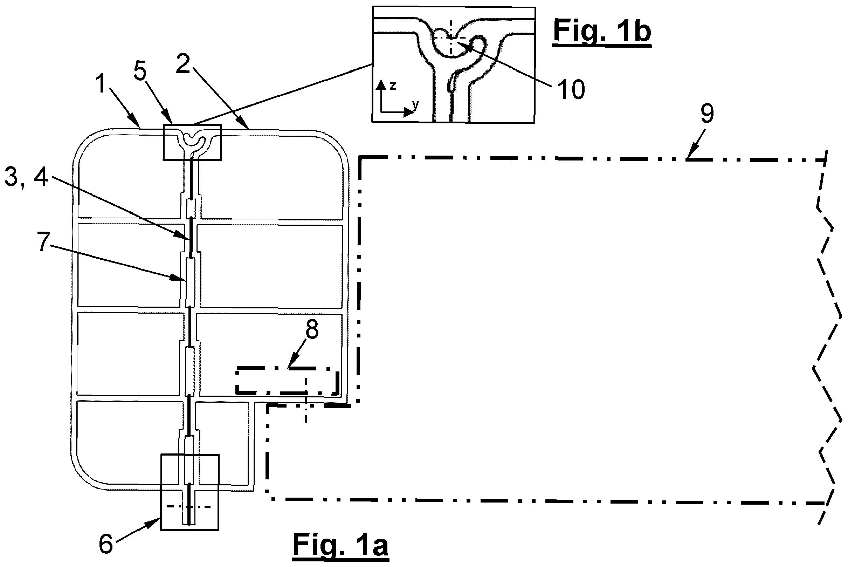

In Fig. 1a ist ein erfindungsgemäßes Kraftfahrzeugbauteil dargestellt, mit einer daran über ein Befestigungsmittel 8 befestigten Antriebsbatterie 9.

Das Kraftfahrzeugbauteil ist ein zweiteiliger Schweller, umfassend ein erstes Profil 1 und ein zweites Profil 2, wobei das erste Profil 1 und das zweite Profil 2 jeweils eine Verbindungsfläche 3 aufweisen, wobei das erste und das zweite Profil 1, 2 an deren Verbindungsflächen 3 mit Hilfe zumindest eines Verbindungsmittels 4, nämlich mit Klebstoff, aneinander gefügt sind. Die Verbindungsflächen 3 eines oder beider Profile 1, 2 können Vertiefungen 7 aufweisen, so dass die Verbindungsfläche 3 durch die Vertiefungen 7 in mehrere kleinere Verbindungsflächen 3 aufgeteilt sein kann.

Das erste Profil 1 und das zweite Profil 2 sind erfindungsgemäß an einem Ende 5 der Verbindungsfläche 3 formschlüssig miteinander verbunden. Dieses Ende 5 der Verbindungsfläche 3 ist in Fig. 1b im Detail dargestellt. Die beiden Profile weisen an den Enden 5 der Verbindungsflächen 3 jeweils kreisbogenförmige Fortsätze auf, die ineinander liegen. Hierdurch wird eine formschlüssige Verbindung zwischen den beiden Profilen 1, 2 erreicht, die eine Schwenkbewegung um eine Schwenkachse 10 ermöglicht.

Das Ende 5 der Verbindungsfläche 3, an welchem die beiden Profile 1, 2 formschlüssig miteinander verbunden sind, erstreckt sich entlang einer Längsrichtung, also x-Richtung, der beiden Profile 1, 2. Die Schwenkachse 10 ist in dieser Längsrichtung der Profile 1, 2 ausgerichtet.

Das erste Profil 1 und das zweite Profil 2 sind an dem Ende der Verbindungsfläche 3 so formschlüssig miteinander verbunden, dass die beiden Profile 1, 2 im Bereich des Endes 5 der Verbindungsfläche 3 zumindest in den beiden Querrichtungen zur Längsrichtung der beiden Profile 1, 2, also in y- und z-Richtung, festgelegt sind - siehe Fig. 1b.

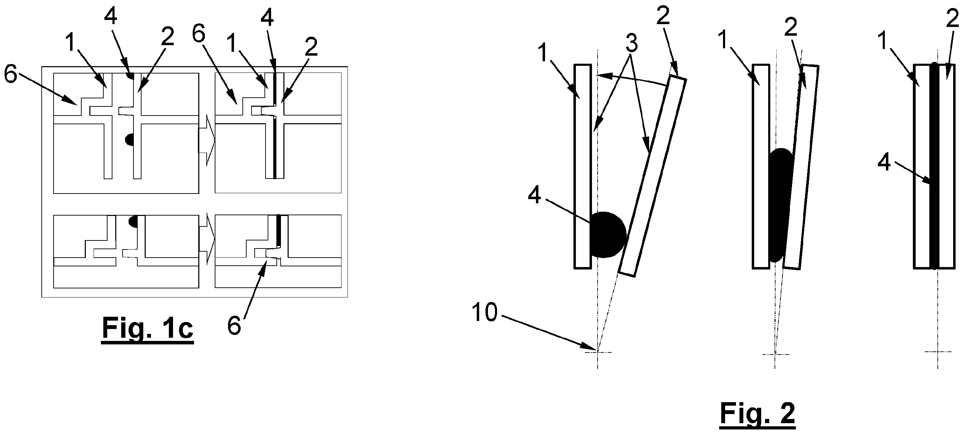

Das erste Profil 1 und das zweite Profil 2 können an demjenigen Ende, dass dem Ende 5 der Verbindungsfläche 3 an welchem die beiden Profile 1, 2 formschlüssig miteinander verbunden sind gegenüberliegt, durch die Verbindungsmittel 4 oder durch weitere Verbindungsmittel 6 aneinander befestigt sein. Mögliche Ausführungen eines weiteren Verbindungsmittels 6 sind in den Fig. 1c dargestellt - eine Ausführungsform in den beiden oberen Abbildungen und eine andere Ausführungsform in den beiden unteren Abbildungen. Dabei sind die beiden Profile 1 und 2 jeweils vor dem Fügen (links) und nach dem Fügen (rechts) dargestellt. Die hier verwendete formschlüssige Verbindung kann einen von der Verbindungsfläche 3 wegweisenden Flasch verwenden (oben) oder ohne einen solchen Flansch ausgebildet sein (unten).

Fig. 2 ist eine schematische Darstellung des Fügeprozesses eines erfindungsgemäßen Kraftfahrzeugbauteils, in drei Verfahrensschritten (von links nach rechts). Zunächst wird Klebstoff als Verbindungsmittel 4 in Form einer Klebstoffraupe auf eine Verbindungsfläche 3 zumindest eines der Profile 1, 2 aufgebracht. Die beiden Verbindungsflächen 3 bzw. die Profile 1, 2 werden an einer Schwenkachse 10 zueinander geschwenkt, wobei sich der Klebstoff gut zwischen den beiden Verbindungsflächen 3 verteilen kann.

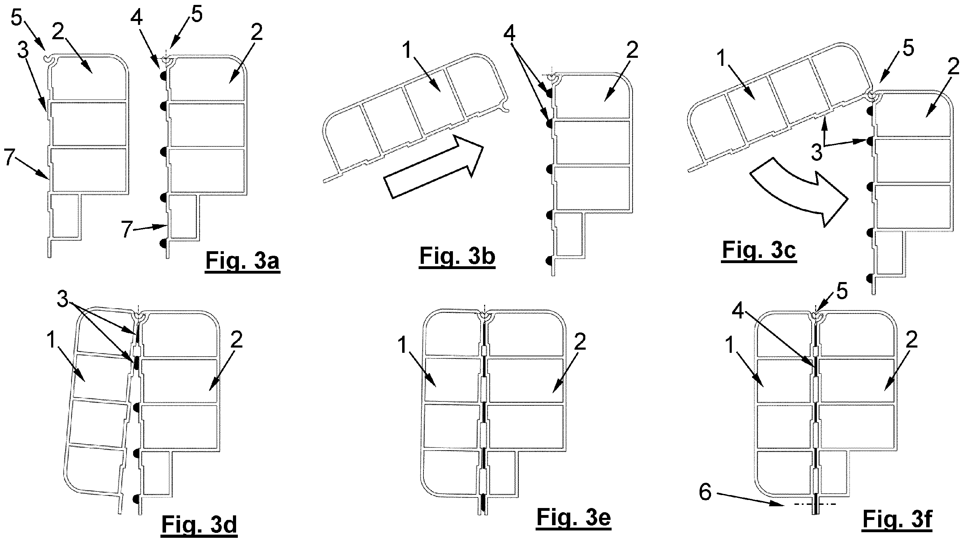

Die Fig. 3 a bis f zeigen Verfahrensschritte bei der Herstellung eines erfindungsgemäßen Kraftfahrzeugbauteils gemäß Fig. 1a, nämlich eines zweiteiligen Schwellers. In Fig. 3a ist lediglich das zweite Profil 2 zweimal dargestellt, nämlich links noch ohne aufgebrachte Klebstoffraupen und rechts mit Klebstoffraupen als Verbindungsmittel 4, die auf die Verbindungsfläche 3 des zweiten Profils 2 aufgebracht wurden.

In Fig. 3b wird ein erstes Profil 1 dem zweiten Profil 2 zugeführt. Im Bereich des Endes 5 der Verbindungsflächen 3 werden das erste und das zweite Profil 1, 2 fomrschlüssig ineinander eingehängt, wobei die restlichen Verbindungsflächen 3 noch voneinander entfernt sind.

Wie in Fig. 3c dargestellt, werden die beiden Profile 1, 2 danach um die Schwenkachse 10 (Fig. 1b) bei der formschlüssigen Verbindung am Ende 5 der Verbindungsflächen 3 geschwenkt, beispielsweise das erste Profil 1 zum zweiten Profil 2 hin geschwenkt.

In Fig. 3d ist dargestellt, wie sich die Kleberaupen durch die abschnittsweise zunehmende Annäherung der beiden Verbindungsflächen 3 immer mehr auf die Verbindungsflächen 3 verteilen, beginnend an dem Ende 5 an dem die Schwenkachse liegt (in Fig. 3c oben). Die Verteilung des Klebstoffs auf die Verbindungsflächen 3 erfolgt dadurch besonders kontrolliert. In Fig. 3e ist schließlich das Verbindungsmittel 4, der Klebstoff aller Kleberaupen, auf die Verbindungsflächen 3, in den Bereichen in denen keine Vertiefung 7 liegt, verteilt.

In Fig. 3f ist schließlich noch dargestellt, dass zusätzlich zur Verbindung mit dem Verbindungsmittel 4 an den Verbindungsflächen 3, eine Verbindung durch ein oder mehrere weitere Verbindungsmittel 6 an dem Ende der Verbindungsflächen 3 erfolgen kann, dass dem Ende 5 gegenüberliegt. Diese weitere Verbindung kann beispielsweise durch Klemmen eines Flansches zwischen anderen Bauteilen oder durch zusätzliche Befestigungselemente oder durch eine zusätzliche formschlüssige Verbindung zwischen den Profilen 1 und 2 erfolgen. Das weitere Verbindungsmittel 6 kann die beiden Profile 1, 2 beispielsweise für die Zeit des Aushärtens des Klebstoffs und/oder dauerhaft fixieren.

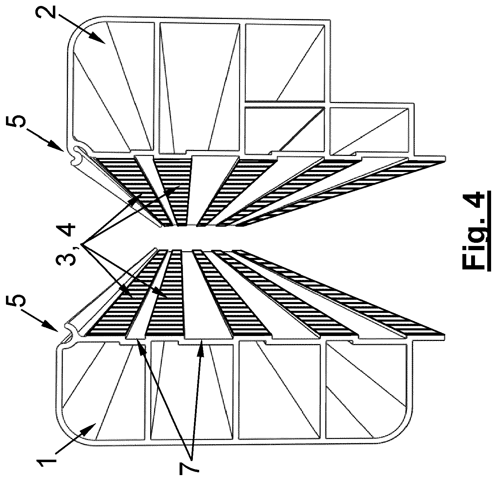

Fig. 4 zeigt eine dreidimensionale Darstellung eines derartigen erfindungsgemäßen zweiteiligen Schwellers gemäß Fig. 1a, wobei die beiden Profile 1 und 2 noch nicht aneinander gefügt sind. Zwischen den horizontal in Längsrichtung verlaufenden Vertiefungen 7 werden definierte Klebeflächen an den verbleibenden Verbindungsflächen 3 geschaffen.

Durch eine bauteilintegrierte formschlüssige Verbindung zwischen den Bauteilen im Bereich des Endes 5 der Verbindungsflächen 3 kann beispielsweise Verbindungstechnik auf einer Seite eingespart werden. Zusätzlich kann während des Fügeprozesses eine definierte Bewegung der Bauteile zueinander realisiert werden. Zum Beispiel können durch eine geführte Drehbewegung bzw. Schwenkbewegung beim Fügen, die Klebeflächen über einen immer kleiner werdenden Winkel bis zur Parallelität zusammengeführt werden (Fig. 3a-f). Man erhält so eine gut definierte, reproduzierbare Klebstoffverteilung.

### Bezugszeichenliste

- 1: erstes Profil
- 2: zweites Profil
- 3: Verbindungsfläche
- 4: Verbindungsmittel
- 5: Ende der Verbindungsfläche
- 6: weiteres Verbindungsmittel
- 7: Vertiefung
- 8: Befestigungsmittel
- 9: Antriebsbatterie
- 10: Schwenkachse

## Patentansprüche

1. Kraftfahrzeugbauteil, insbesondere Schweller, umfassend ein erstes Profil (1) und ein zweites Profil (2), wobei das erste Profil (1) und das zweite Profil (2) jeweils eine Verbindungsfläche (3) aufweisen, wobei das erste und das zweite Profil (1, 2) an deren Verbindungsflächen (3) mit Hilfe zumindest eines Verbindungsmittels (4) aneinander gefügt sind,
**dadurch gekennzeichnet, dass** das erste Profil und das zweite Profil an einem Ende (5) der Verbindungsfläche (3) formschlüssig miteinander verbunden sind.

2. Kraftfahrzeugbauteil nach Anspruch 1,
**dadurch gekennzeichnet, dass** sich das Ende (5) der Verbindungsfläche (3), an welchem die beiden Profile (1, 2) formschlüssig miteinander verbunden sind, entlang einer Längsrichtung, also x-Richtung, der beiden Profile (1, 2) erstreckt.

3. Kraftfahrzeugbauteil nach zumindest einem der vorhergehenden Ansprüche,
**dadurch gekennzeichnet, dass** das erste Profil (1) und das zweite Profil (2) an dem Ende (5) der Verbindungsfläche (3) durch eine dreh- oder schwenkbare Verbindung formschlüssig miteinander verbunden sind.

4. Kraftfahrzeugbauteil nach zumindest einem der vorhergehenden Ansprüche,
**dadurch gekennzeichnet, dass** das erste Profil (1) und das zweite Profil (2) an dem Ende der Verbindungsfläche (3) so formschlüssig miteinander verbunden sind, dass die beiden Profile (1, 2) zumindest im Bereich des Endes (5) der Verbindungsfläche (3) zumindest in den beiden Querrichtungen zur Längsrichtung der beiden Profile (1, 2), also in y- und z-Richtung, festgelegt sind.

5. Kraftfahrzeugbauteil nach zumindest einem der vorhergehenden Ansprüche,
**dadurch gekennzeichnet, dass** das erste Profil (1) und das zweite Profil (2) an demjenigen Ende, dass dem Ende (5) der Verbindungsfläche (3) an welchem die beiden Profile (1, 2) formschlüssig miteinander verbunden sind gegenüberliegt, durch die Verbindungsmittel (4) oder durch weitere Verbindungsmittel (6) aneinander befestigt sind.

6. Kraftfahrzeugbauteil nach zumindest einem der vorhergehenden Ansprüche,
**dadurch gekennzeichnet, dass** das Verbindungsmittel (4) Klebstoff ist und/oder Nieten, Schrauben oder eine Verschweißung.

7. Kraftfahrzeugbauteil nach zumindest einem der vorhergehenden Ansprüche,
**dadurch gekennzeichnet, dass** die Verbindungsfläche (3) Vertiefungen (7) aufweist, so dass die Verbindungsfläche (3) durch die Vertiefungen (7) in mehrere kleinere Verbindungsflächen (3) aufgeteilt ist.

8. Verfahren zur Herstellung eines Kraftfahrzeugbauteils nach zumindest einem der vorhergehenden Ansprüche,
**dadurch gekennzeichnet , dass** das erste Profil (1) und das zweite Profil (2) separat voneinander bereitgestellt werden, dass danach das erste Profil (1) und das zweite Profil (2) an einem Ende (5) der Verbindungsfläche (3) formschlüssig miteinander verbunden werden und dass danach das erste und das zweite Profil (1, 2) an deren Verbindungsflächen (3) durch Verbindungsmittel (4) aneinander befestigt werden und/oder zumindest an demjenigen Ende, dass dem Ende (5) der Verbindungsfläche (3) an welchem die beiden Profile (1, 2) formschlüssig miteinander verbunden sind gegenüberliegt, durch die Verbindungsmittel (4) oder durch weitere Verbindungsmittel (6) aneinander befestigt werden.

9. Verfahren nach Anspruch 8,
**dadurch gekennzeichnet , dass** das erste Profil (1) und das zweite Profil (2) an dem Ende (5) der Verbindungsfläche (3) formschlüssig miteinander verbunden werden, insbesondere ein Profil (1, 2) in das andere Profil (1, 2) eingehängt oder eingeschoben wird, wobei die beiden Verbindungsflächen (3) nicht parallel zueinander ausgerichtet sind, und dass danach das erste und das zweite Profil (1, 2) zueinander geschwenkt werden, so dass deren Verbindungsflächen (3) parallel zueinander ausgerichtet werden, und dass dabei oder danach die beiden Verbindungsflächen (3) durch Verbindungsmittel (4) aneinander befestigt werden, zumindest an demjenigen Ende, dass dem Ende (5) der Verbindungsfläche (3), an welchem die beiden Profile (1, 2) formschlüssig miteinander verbunden sind, gegenüberliegt.

## Geänderte Patentansprüche

### Geänderte Patentansprüche gemäss Regel 137(2) EPÜ.

1. Kraftfahrzeugbauteil, insbesondere Schweller, umfassend ein erstes Profil (1) und ein zweites Profil (2), wobei das erste Profil (1) und das zweite Profil (2) jeweils eine Verbindungsfläche (3) aufweisen, wobei das erste und das zweite Profil (1, 2) an deren Verbindungsflächen (3) mit Hilfe zumindest eines Verbindungsmittels (4) aneinander gefügt sind, wobei das Verbindungsmittel (4) Klebstoff ist,
wobei das erste Profil und das zweite Profil an einem Ende (5) der Verbindungsfläche (3) formschlüssig miteinander verbunden sind, wobei das erste Profil (1) und das zweite Profil (2) an dem Ende (5) der Verbindungsfläche (3) durch eine dreh- oder schwenkbare Verbindung formschlüssig miteinander verbunden sind,
**dadurch gekennzeichnet, dass** die Verbindungsfläche (3) Vertiefungen (7) aufweist, so dass die Verbindungsfläche (3) durch die Vertiefungen (7) in mehrere kleinere Verbindungsflächen (3) aufgeteilt ist.

2. Kraftfahrzeugbauteil nach Anspruch 1,
**dadurch gekennzeichnet, dass** sich das Ende (5) der Verbindungsfläche (3), an welchem die beiden Profile (1, 2) formschlüssig miteinander verbunden sind, entlang einer Längsrichtung, also x-Richtung, der beiden Profile (1, 2) erstreckt.

3. Kraftfahrzeugbauteil nach zumindest einem der vorhergehenden Ansprüche,
**dadurch gekennzeichnet, dass** das erste Profil (1) und das zweite Profil (2) an dem Ende der Verbindungsfläche (3) so formschlüssig miteinander verbunden sind, dass die beiden Profile (1, 2) zumindest im Bereich des Endes (5) der Verbindungsfläche (3) zumindest in den beiden Querrichtungen zur Längsrichtung der beiden Profile (1, 2), also in y- und z-Richtung, festgelegt sind.

4. Kraftfahrzeugbauteil nach zumindest einem der vorhergehenden Ansprüche,
**dadurch gekennzeichnet, dass** das erste Profil (1) und das zweite Profil (2) an demjenigen Ende, dass dem Ende (5) der Verbindungsfläche (3) an welchem die beiden Profile (1, 2) formschlüssig miteinander verbunden sind gegenüberliegt, durch die Verbindungsmittel (4) oder durch weitere Verbindungsmittel (6) aneinander befestigt sind.

5. Verfahren zur Herstellung eines Kraftfahrzeugbauteils nach zumindest einem der vorhergehenden Ansprüche,
**dadurch gekennzeichnet, dass** das erste Profil (1) und das zweite Profil (2) separat voneinander bereitgestellt werden, dass danach das erste Profil (1) und das zweite Profil (2) an einem Ende (5) der Verbindungsfläche (3) formschlüssig miteinander verbunden werden und dass danach das erste und das zweite Profil (1, 2) an deren Verbindungsflächen (3) durch Verbindungsmittel (4) aneinander befestigt werden und/oder zumindest an demjenigen Ende, dass dem Ende (5) der Verbindungsfläche (3) an welchem die beiden Profile (1, 2) formschlüssig miteinander verbunden sind gegenüberliegt, durch die Verbindungsmittel (4) oder durch weitere Verbindungsmittel (6) aneinander befestigt werden.

6. Verfahren nach Anspruch 5,
**dadurch gekennzeichnet, dass** das erste Profil (1) und das zweite Profil (2) an dem Ende (5) der Verbindungsfläche (3) formschlüssig miteinander verbunden werden, insbesondere ein Profil (1, 2) in das andere Profil (1, 2) eingehängt oder eingeschoben wird, wobei die beiden Verbindungsflächen (3) nicht parallel zueinander ausgerichtet sind, und dass danach das erste und das zweite Profil (1, 2) zueinander geschwenkt werden, so dass deren Verbindungsflächen (3) parallel zueinander ausgerichtet werden, und dass dabei oder danach die beiden Verbindungsflächen (3) durch Verbindungsmittel (4) aneinander befestigt werden, zumindest an demjenigen Ende, dass dem Ende (5) der Verbindungsfläche (3), an welchem die beiden Profile (1, 2) formschlüssig miteinander verbunden sind, gegenüberliegt.
